## Europäisches Patentamt
## European Patent Office
## Office européen des brevets

(11) Publication number: **0 089 726**
**B1**

# EUROPEAN PATENT SPECIFICATION

(45) Date of publication of patent specification: **02.01.86**

(21) Application number: **83200382.6**

(22) Date of filing: **21.03.83**

(51) Int. Cl.⁴: **C 10 J 3/06,** C 10 J 3/20,
C 10 J 3/72, C 01 B 3/36,
F 02 C 3/28

(54) Process and device for the preparation of a combustible gaseous mixture and power generating apparatus.

(30) Priority: **23.03.82 NL 8201211**

(43) Date of publication of application:
**28.09.83 Bulletin 83/39**

(45) Publication of the grant of the patent:
**02.01.86 Bulletin 86/01**

(84) Designated Contracting States:
**AT BE CH DE FR GB IT LI LU NL SE**

(56) References cited:
EP-A-0 024 366
BE-A- 551 978
CH-A- 336 544
DE-B-1 021 972
DE-B-1 276 411
DE-C- 851 571
US-A-4 039 272
US-A-4 183 208
US-A-4 282 009

(73) Proprietor: **THOMASSEN INTERNATIONAL B.V.**
Havelandseweg 8
NL-6991 GS Rheden (NL)

(72) Inventor: **Oude Alink, Aloysius Johannes
Willehardus**
39 Wilgenhoek
NL-6903 BR Zevenaar (NL)

(74) Representative: **Mathol, Heimen et al
EXTERPATENT Willem Witsenplein 4
NL-2596 BK 's-Gravenhage (NL)**

Courier Press, Leamington Spa, England.

## Description

The invention relates to a process for the preparation of a combustible gaseous mixture from solid or liquid fuels, such as coal, heavy oil or tar sand, using a treatment path formed, inter alia, by the inside of at least one rotating cup-shaped support grate constructed as a body of revolution, the fuel moving in this treatment path, as a result of a centrifugal field, along the inside in a direction from the base of the cup-shaped support grate to the free edge, while a gaseous medium (the process gas) is fed to the outside of the support grate at a pressure higher than the pressure at the inside of said grate, whereupon the combustible gaseous mixture (the product gas) is discharged via a screening layer of a sorbent material.

A process of this kind is known from Applicant's EP—A—0 024 366, in which it has been proposed for the first time to permit a continuous gasification process by means of an artificial gravitational field which forms the treatment path for the fuel supplied.

The object of this invention is to improve this known process in various respects, in such a manner that a high-grade combustible gaseous mixture of relatively high purity becomes available.

These objects are achieved according to the invention by the following steps:

— a granular refractory material is first deposited in an uninterrupted flow against the inside of the support grate so that a covering layer is formed which, together with the fuel supplied thereto, advances as a sliding bed in the centrifugal field along the support grate;
— the velocity of the process gas fed to the outside of the support grate is so determined in conjunction with the centrifugal acceleration in the sliding bed that only particles in that bed having a dimension of less than e.g. 5 $\mu$ are entrained with the product gas; and
— the composition of the process gas and the quantity of fuel supplied per unit time are so adapted to one another that the temperature of the product gas is in the order of 900°C.

The refractory material may, for example, be sand, by means of which a continuously sliding sand bed is obtained on the inside of the support grate, the solid or liquid fuel resting on this sand bed and, with it, gradually traversing the treatment path. The process gas will be able to react with the fuel as a result of the sand particles in a finely pulverized state and in these conditions a number of particles smaller than a specific maximum size will be entrained. The other particles, i.e. most of the amount of sand supplied, remain present on the inside of the support grate as a result of the centrifugal force and the product gas can only contain particles less than the specified dimensions.

As a result of restricting the gasification temperature occurring to a value between 700° and 1 000°C, a maximum bond can be obtained between the evolved $H_2S$ and the sorbent material, which is present in the form of a screening layer and through which the product gas has to flow. It is also important that the ash of the fuel mixed with sand, on the one hand, and the sorbent material, on the other hand, are discharged separately, thus allowing the possible regeneration of reacted sorbent material. This sorbent material consists, for example, of dolomite, half-calcined dolomite, chalk, marl, $CaCO_3$, $MgCO_3$, $CaOH$, $MgOH$, and so on. As a result of the use of such a material the final product gas becomes substantially free from $H_2S$. Since $H_2S$ bonding takes place in situ, high-sulphur content coals and oil can be gasified.

There is no sintering of ash and sand because the process temperature, as indicated above, is far below the ash "fusing" temperature. Since all the small particles above the specified dimensions will be retained against the inside of the support grate, impurities in the product gas can be restricted to a minimum. This applies both to solid impurities, e.g. $Va_2O_5$ and Na and K compounds, and also liquid impurities such as, e.g. $Na_2S$, $K_2S$, $Na_2SO_4$ and $K_2SO_4$. Gaseous impurities may also be present, e.g. vapour forms of liquid impurities. As a result of the relatively low process temperature, as indicated above, the vapour pressures of impurities will be low. On the other hand, the product gas contains no tar-like substances, because the process temperature is sufficiently high to cause products in tar form to be cracked spontaneously. The product gas is a clean gas which can be used directly.

It is observed that the phenomenon occurring within the support grate in the method according to the invention is fundamentally different from the process of a rotating fluidized bed gasifier as f.i. disclosed in US—A—4,183,208 and US—A—4,039,272. The velocity of the incoming gas stream in said known process should always be greater than or equal to the minimum fluidizing speed, taking into account the limited artificial gravitational field applied in this process. In the system according to the present invention, the velocity of the process gas is limited to the so-called elutriation speed viz the speed at which only particles up to a certain size are entrained with the product gas. The sliding bed does not fluidize but remains packed under the influence of an artificial gravitational field which is at least twenty times higher than in the abovementioned known process.

The process is performed with the sliding gasifying bed and the screening layer being operative in a common enclosure, vide EP—A—0 024 366. According to the present invention, the process is preferably so performed that a superatmospheric pressure is maintained within said enclosure during operation. Given a superatmospheric pressure of, for example, 1—$2.10^3$ kPa, the dimensions of the rotating support grate can be small and a high energy density can be obtained. Another important advantage is that the low mass of the rotating parts and the materials present thereon allow a rapid startingup procedure.

The invention also relates to a device for performing the process indicated hereinbefore, comprising at least two concentrically disposed rotatable cup-shaped support grates with a drive, the grates being provided with at least one feed member for material involved in the intended gasification process, the device also being constructed with an inlet for process gas and an outlet for product gas. According to the invention, this device is characterised in that the outer support grate (the main grate) is provided with at least two supply members, one of which discharges closer to the base of the cup than the other or others. The said main grate then forms the actual gasification bed, while the other support grate or grates (auxiliary grates) can serve to receive sorbent material in order thus to obtain a combustible gaseous mixture of high purity.

The invention is also embodied in an apparatus for generating mechanical energy by means of a gas turbine, said apparatus being characterised by the presence of the device described hereinbefore, wherein a recuperator is provided while at least one branch of the pipe from the compressor is connected via the recuperator to the process gas inlet and the product gas outlet is connected to the combustion chamber of the gas turbine.

In this apparatus, the clean product gas produced by the gasifier is used directly in the gas turbine so that there is no loss of latent heat. It was hitherto often necessary to provide a particle trap system after the gasifier, e.g. in the form of cyclones or dust filters. However, these result in a pressure and heat loss, and this is obviated in the apparatus according to the invention.

It should be noted that the product gas obtained with the process and apparatus according to the invention has a low calorific value because normal pressurized air is used as process gas. A low calorific value, clean and hot product gas is thus obtained with a high thermal efficiency, this gas being directly usable in a gas turbine so that the apparatus described hereinbefore can be generally used for both static and mobile use, e.g. on railways and ships.

The invention will be explained more in detail with reference to the accompanying drawings, which illustrate a single embodiment of the device and of the apparatus.

Fig. 1 is a longitudinal section of a simplified illustration of the gasifier according to the invention.

Fig. 2 diagrammatically illustrates the apparatus consisting of a gasifier and a gas turbine.

Fig. 3 is a diagram of the apparatus according to Fig. 2 showing the materials supplied and discharged.

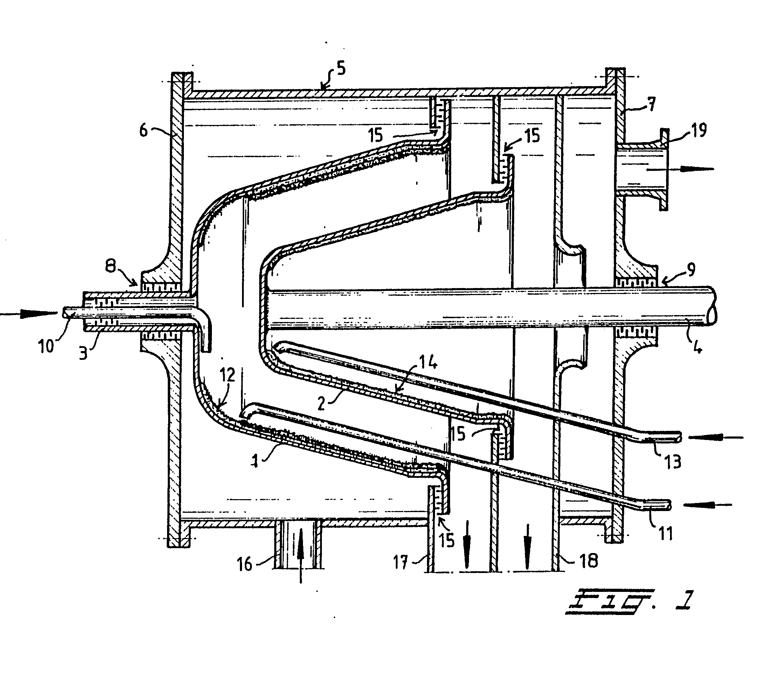

The embodiment of the apparatus shown in Fig. 1 for the performance of the process is constructed from two rotatable cup-shaped support grates 1 and 2 disposed concentrically. The outer support grate (the main grate) 1 is connected to a hollow shaft 3 which can be driven at a speed n1 by means of a power source (not shown). The support grate (auxiliary grate) 2 is secured to a shaft 4 which can be driven at a speed n2. The support grates 1 and 2 are disposed inside a common enclosure or housing 5 with covers 6 and 7. Hollow shaft 3 extends through cover 6 via a seal 8 while shaft 4 extends through cover 7 via a seal 9.

The main grate 1 is provided with two tubular feed means 10 and 11, means 10 discharging closer to the bottom of the cup than the other means 11. Granular refractory material (e.g. sand) is deposited via means 10 in an uninterrupted flow against the inside of the support grate 1 so that a covering layer 12 is formed. The solid or liquid fuel, e.g. pulverized coal, heavy oil, or tar sand, is fed via the feed means 11. This fuel will rest on the covering layer 12, which during operation moves as a sliding bed in the centrifugal field along the support grate 1.

A tubular feed means 13 for a sorbent material is provided inside the auxiliary grate 2. This results in a screening layer 14 against the inner wall of the auxiliary grate 2. The two grates 1 and 2 are provided along their open edge, with an annular seal 15 with respect to the stationary housing 5. The cylindrical surface of this housing is formed with an inlet 16 for process gas (usually air) and an outlet 17 for ash originating from the main grate 1 and an outlet 18 for used sorbent material originating from the auxiliary grate 2. Finally, an outlet 19 for the product gas is provided in the cover 7.

During operation, the support grates 1 and 2 being driven, a centrifugal field forms for the two grates, the inside of the main grate 1 forming a treatment path for the fuel supplied via the means 11. As a result of the centrifugal field, the covering layer 12 will advance along the inside of the main grate 1 in a direction from the base of the cup-shaped grate to the free edge, the treated material disappearing via the outlet 17. The process gas supplied at some positive pressure via the inlet 16 passes through the grate 1 and through the covering layer 12 resting against the same, and results in the required gasification of the fuel supplied via the means 11. The resulting product gas is compelled to flow through the auxiliary grate 2 and through the screening layer 14 of sorbent material resting against the same. Consequently, $H_2S$ is retained and the aforesaid impurities are adsorbed from the product gas, which gas can then flow via outlet 19 to the intended destination. The screening layer 14 also moves gradually in a direction from the base to the free edge of the cup and then disappears via the outlet 18. If possible, this material can be regenerated for resupply finally via the means 13.

An important factor to the present preparation process is the velocity of the process gas fed to the outside of the main grate 1, this velocity being so determined in connection with the centrifugal acceleration in the sliding bed (the covering layer 12) that only particles in said bed having a dimension of less than 5 µ are entrained with the product gas. Under certain conditions the dimensions of the entrained particles can be restricted to 3 and even 2 µ. It is also important that the composition of the process gas fed via the inlet 16 and the quantity of fuel per unit of time via the means 11, should be so adapted to one another that the temperature of the product gas is in the order of 900°C. This definition denotes a temperature comprised between 700° and 1 000°C.

It should be noted that the g-value of the centrifugal field in the screening layer 14 can be determined independently of the g-value in the sliding gasification bed or covering layer 12. These values can be obtained by correct determination of the respective speeds n2 and n1.

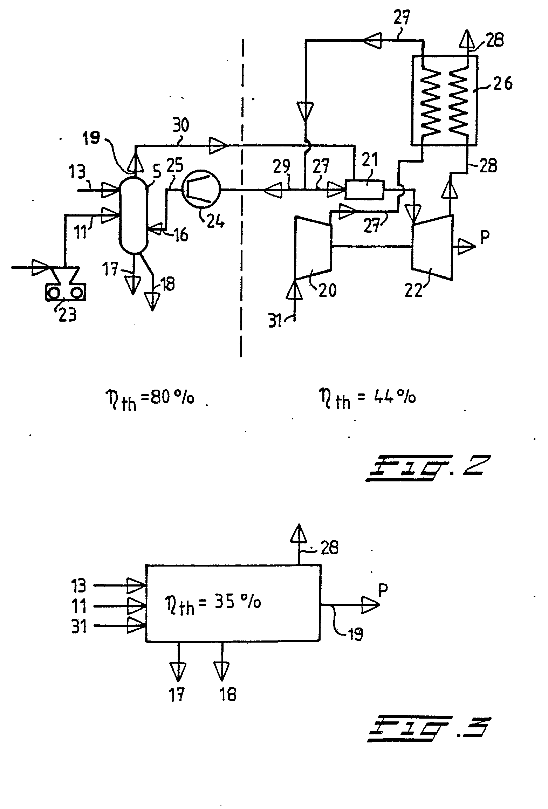

Figs. 2 and 3 show an important application of the gasifier according to Fig. 1, i.e. an apparatus for generating mechanical energy by means of a gas turbine. The gas turbine used may be a type TF-10 regenerative intercooled cycle machine with a thermal efficiency of 44%. The most important components of this gas turbine are shown on the right-hand side of Fig. 2, and consist of a compressor 20, a combustion chamber 21 and the actual turbine 22. The left-hand side of Fig. 2 shows the gasifier, i.e. the housing 5 in combination with a device 23 for producing pulverized coal with a particle size of less than 1,5 mm. An air compressor 24 is also provided, which is connected via a line 25 to the inlet 16.

The apparatus also comprises a recuperator 26 which effects heat-exchange between the air compressed by the compressor 20 and flowing through a conduit 27, on the one hand, and the waste gases of the gas turbine 22 escaping via a conduit 28, on the other hand. The conduit 27 from the recuperator 26 has a branch 29 leading to the air compressor 24. The product gas outlet 19 is connected via a conduit 30 to the combustion chamber 21. Conduit 27 for the possible supply of part of the compressed air originating from inlet 31 of compressor 20 also leads into the combustion chamber 21. Fig. 3 is a highly diagrammatic view of the incoming and outgoing flow associated with the apparatus according to Fig. 2.

It should be noted that the present device is not restricted to the use of two support grates disposed one inside the other. More support grates may be provided, and they may also be disposed in extension of one another, see the aforementioned EP—A—0 024 366, Fig. 4.

An example of the quantities, pressures and velocities used in the present process, together with the resulting composition of the product gas, are finally given below:

# 0 089 726

## Example

Type of coal: Illinois sub-bituminous (sulfur contents: 1,8%)

| | |
|---|---|
| Quantity of sand | = 0.2 kg/sec. |
| Quantity of coal | = 0.7 kg/sec. |
| Average coal diameter | = 1.5 mm |
| Coal residence time | = 58 sec. |
| Speed n1 of support grate 1 (coal) | = 2000 rpm |
| Speed n2 of support grate 2 (sorbent) | = 5700 rpm |
| Centrifugal acceleration on mean diameter | = 2500 g |
| Air velocity through support grate 1 | = 5 m/sec |
| Process pressure in product outlet 19 | = 1380 kPa |
| Process temperature | = 880°C |
| Thermal efficiency | = 80% |
| Dust concentration, particles less than 5 $\mu$ | = <15 ppm |
| Dolomite, Ca, Mg | |
| Alkali compound concentration | = 0.08 ppm |
| Bottom calorific value product gas | = 5700 kJ/nm$^3$ |
| Bottom calorific value including latent heat | = 6024 kJ/nm$^3$ |

### Product gas composition:

| | | | | | |
|---|---|---|---|---|---|
| $N_2$ | — | 50.25% | $C_2H_6$ | — | nil |
| $CO_2$ | — | 0.5 % | $C_3H_8$ | — | ,, |
| $CO$ | — | 32.2 % | $C_4H_{10}$ | — | ,, |
| $H_2$ | — | 16.05% | $C_5H_{12}$ | — | ,, |
| $CH_4$ | — | 0.5 % | $H_2S$ | — | ,, |
| $H_2O$ | — | 0.5 % | | | |
| | | 100.0 % | | | |

## Claims

1. A process for the preparation of a combustible gaseous mixture from solid or liquid fuels, such as coal, heavy oil or tar sand, using a treatment path formed, inter alia, by the inside of at least one rotating cup-shaped support grate constructed as a body of revolution, the fuel moving in this treatment path, as a result of a centrifugal field, along the inside in a direction from the base of the cup-shaped support grate to the free edge, while a gaseous medium (the process gas) is fed to the outside of the support grate at a pressure higher than the pressure at the inside of said grate, whereupon the combustible gaseous mixture (the product gas) is discharged via a screening layer of a sorbent material, characterised in that:

— a granular refractory material is first deposited in an uninterrupted flow against the inside of the support grate so that a covering layer is formed which, together with the fuel supplied thereto, advances as a sliding bed in the centrifugal field along the support grate;
— the velocity of the process gas fed to the outside of the support grate is so determined in conjunction with the centrifugal accelera-

5

tion in the sliding bed that only particles in that bed having a dimension of less than 5 µ are entrained with the product gas, and
— the composition of the process gas and the quantity of fuel supplied per unit time are so adapted to one another that the temperature of the product gas is in the order of 900°C.

2. A process according to claim 1, in which the sliding gasifying bed and the screening layer are operative in a common enclosure, characterised in that a superatmospheric pressure is maintained within said enclosure during operation.

3. A process according to claim 1 or 2, in which a centrifugal field is maintained in the screening layer of sorbent material as well, characterised in that the g-value of the centrifugal field in the screening layer is determined independently of the g-value in the sliding gaseous bed.

4. Device for performing the process according to any one of claims 1 to 3, comprising at least two concentrically disposed rotatable cup-shaped support grates with a drive, the grates being provided with at least one feed member for material involved in the intended gasification process, the device also being constructed with an inlet for process gas and an outlet for product gas, characterised in that the outer support grate (1) is provided with at least two supply members (10, 11), one of which (10) discharges closer to the base of the cup than the other or others (11).

5. Device according to claim 4, characterised in that the drive (n1) for the outer support grate (1) is controllable independently of the drive (n2) for the other support grate (2).

6. Apparatus for generating mechanical energy by means of a gas turbine, characterised by the presence of a device according to claim 4 or 5, a recuperator (26) being provided while at least one branch (29) of the pipe (27) from the compressor (20) is connected via the recuperator (26) to the process gas inlet (16) and the product gas outlet (19) is connected to the combustion chamber (21) of the gas turbine (22).

**Patentansprüche**

1. Verfahren zur Herstellung einer brennbaren Gasmischung aus festen oder flüssigen Brennstoffen, wie z.B. Kohle, Schweröl oder Ölsand, unter Verwendung eines Behandlungsweges, der unter anderem von der Innenseite von mindestens einem rotierenden schalenförmigen Tragrost gebildet wird, der als Umdrehungskörper aufgebaut ist, wobei der Brennstoff sich auf diesem Behandlungsweg infolge eines Zentrifugalfeldes längs der Innenseite in einer Richtung von der Basis des schalenförmigen Tragrostes zur freien Kante bewegt, während ein gasförmiges Medium (das Prozeßgas) der Außenseite des Tragrostes bei einem Druck zugeführt wird, der höher ist als der Druck an der Innenseite des Rostes, woraufhin die brennbare Gasmischung (das Produktgas) über eine Siebschicht eines Sorptionsmittels ausgetragen wird, dadurch gekennzeichnet,

— daß ein körniges feuerfestes Material zuerst in einer ununterbrochenen Strömung gegen Innenseite des Tragrostes aufgebracht wird, so daß eine Deckschicht gebildet wird, die, zusammen mit dem dort zugeführten Brennstoff, sich als Gleitbett in dem Zentrifugalfeld längs des Tragrostes vorwärts bewegt;
— daß die Geschwindigkeit des Prozeßgases, das der Außenseite des Tragrostes zugeführt wird, so im Zusammenhang mit der Zentrifugalbeschleunigung in dem Gleitbett bestimmt wird, daß nur Teilchen in dem Bett mit einer Abmessung von weniger als 5 µm mit dem Produktgas mitgenommen werden,
— und daß die Zusammensetzung des Prozeßgases und die Menge des pro Zeiteinheit zugeführten Brennstoffes so aneinander angepaßt sind, daß die Temperatur des Produktgases in der Größenordnung von 900°C liegt.

2. Verfahren nach Anspruch 1, bei dem das gleitende Vergasungsbett und die Siebschicht in einem gemeinsamen Gehäuse wirksam sind, dadurch gekennzeichnet, daß ein Überdruck in dem Gehäuse während des Betriebes aufrechterhalten wird.

3. Verfahren nach Anspruch 1 oder 2, bei dem ein Zentrifugalfeld auch in der Siebschicht des Sorptionsmittels aufrechterhalten wird, dadurch gekennzeichnet, daß der g-Wert des Zentrifugalfeldes in der Siebschicht unabhängig von dem g-Wert in dem gleitenden gasförmigen Bett bestimmt wird.

4. Einrichtung zur Durchführung des Verfahrens nach einem der Ansprüche 1 bis 3, mit mindestens zwei konzentrisch angeordneten, drehbaren schalenförmigen Tragrosten mit einem Antrieb, wobei die Roste mit mindestens einem Zuführungsteil für Material versehen sind, das bei dem beabsichtigten Vergasungsverfahren eine Rolle spielt, wobei die Einrichtung außerdem mit einem Einlaß für Prozeßgas und einem Auslaß für Produktgas ausgerüstet ist, dadurch gekennzeichnet, daß der äußere Tragrost (1) mit mindestens zwei Zuführungselementen (10, 11) versehen ist, von denen eines (10) dichter an der Basis der Schale zuführt als das andere oder die anderen (11).

5. Einrichtung nach Anspruch 4, dadurch gekennzeichnet, daß der Antrieb (n1) für den äußeren Tragrost (1) unabhängig von dem Antrieb (n2) für den anderen Tragrost (2) steuerbar ist.

6. Vorrichtung zur Erzeugung von mechanischer Energie mittels einer Gasturbine, gekennzeichnet durch die Anwesenheit einer Einrichtung gemäß Anspruch 4 oder 5, wobei ein Wärmetauscher (26) vorgesehen ist, wobei mindestens eine Zweigleitung (29) einer Leitung (27) von dem Kompressor (20) über den Wärmetauscher (26) an den Prozeßgaseinlaß (16) angeschlossen ist und der Produktgasauslaß (19) an die Brennkammer (21) der Gasturbine (22) angeschlossen ist.

**Revendications**

1. Procédé de préparation d'un mélange combustible gazeux à partir d'un carburant liquide ou solide, tel que le charbon, une huile lourde ou un sable bitumineux, au moyen d'un dispositif de traitement constitué, entre autres, par l'intérieur d'au moins une grille-support rotative en forme de coupelle, construite en corps de révolution, le carburant se déplaçant dans ce dispositif sous l'effet de la force centrifuge, le long de 'intérieur, dans une direction allant de la base de la grille-support en forme de coupelle vers les bords libres, tandis qu'un moyen gazeux (le gaz de traitement) est injecté à l'extérieur de la grille-support sous une pression supérieure à celle s'exerçant à l'intérieur de ladite grille, de telle sorte que le mélange gazeux combustible (le produit gazeux) soit évacué par une couche tamis d'un matériau absorbant caractérisé en ce que:

— un matériau granulaire réfractaire est tout d'abord déposé en un flux ininterrompu contre l'intérieur d'une grille-support, de telle sorte qu'une couche de recouvrement soit formée, qui avance en même temps que le carburant injecté, sous forme de couche glissante, dans le champ centrifuge le long de la grille-support;

— la vélocité du gaz de traitement injecté à l'extérieur de la grille-support est déterminée en fonction de l'accélération centrifuge dans la couche glissante, de telle sorte que seules les particules de cette couche ayant une dimension inférieure à 5 µ soient entraînées avec le produit gazeux; et,

— la composition du gaz de traitement et la quantité de carburant fournie par unité de temps, sont adaptées l'une à l'autre de telle sorte que la température du produit gazeux soit de l'ordre de 900°C.

2. Procédé selon la revendication 1, dans lequel la couche glissante de gazéification et la couche écran agissent dans le même volume, caractérisé en ce qu'une pression superatmosphérique est maintenue dans ce volume pendant le fonctionnement.

3. Procédé selon la revendication 1 ou 2, dans lequel un champ centrifuge est maintenu également dans la couche écran de matériau absorbant, caractérisé en ce que la valeur g de la force centrifuge dans la couche écran est déterminée indépendamment de la valeur g dans la couche gazeuse glissante.

4. Dispositif pour la mise en oeuvre du procédé selon l'une quelconque des revendications 1 à 3, comprenant au moins deux grilles-supports rotatives en forme de coupelles disposées concentriquement et un entraînement, les grilles étant pourvues d'au moins un élément d'amenée du matériau concerné dans le procédé de gazéification, le dispositif étant aussi pourvu d'une arrivée de gaz de traitement et d'une sortie de produit gazeux, caractérisé en ce que la grille-support externe (1) est pourvue d'au moins deux éléments d'amenée (10 et 11) dont l'une (10) aboutit plus près de la base de la coupelle que le ou les autres (11).

5. Dispositif selon la revendication 4, caractérisé en ce que le avitesse n1 de la grille-support externe (1) peut être réglée indépendamment de la vitesse n2 de l'autre grille-support (2).

6. Appareil pour engendrer une énergie mécanique au moyen d'une turbine à gaz, caractérisé en ce qu'il comprend un dispositif selon la revendication 4 ou 5, et un récupérateur (26), au moins une dérivation (29) de la conduite (27) venant du compresseur (20) étant connectée, par l'intermédiaire du récupérateur (26), à l'arrivée (16) de gaz de traitement, tandis que la sortie (19) de produit gazeux est connectée à la chambre de combustion (21) de la turbine à gaz (22).

Fig. 1

0 089 726

$\eta_{th} = 80\%$ . $\eta_{th} = 44\%$

FIG. 2

$\eta_{th} = 35\%$

FIG. 3